# EUROPÄISCHE PATENTSCHRIFT

(11) **EP 2 521 640 B1**
(45) Veröffentlichungstag und Bekanntmachung des Hinweises auf die Patenterteilung: **24.07.2013**
(21) Anmeldenummer: 12708126.3
(22) Anmeldetag: 07.03.2012
(51) Int. Cl.: B29B 15/12

(54) **VERFAHREN SOWIE VORRICHTUNG ZUR HERSTELLUNG EINES FASERVERBUNDWERKSTOFFES IN FORM EINES MIT EINEM POLYMER IMPRÄGNIERTEN FASERBANDES**
METHOD AND DEVICE FOR PRODUCING A COMPOSITE FIBRE MATERIAL IN THE FORM OF A FIBRE STRIP IMPREGNATED WITH A POLYMER
PROCÉDÉ ET DISPOSITIF DE FABRICATION D'UN MATÉRIAU COMPOSITE FIBREUX SOUS LA FORME D'UNE BANDE DE FIBRE IMPRÉGNÉE D'UN POLYMÈRE

(30) Priorität: 11.03.2011 DE 102011005462
(43) Veröffentlichungstag der Anmeldung: 14.11.2012
(73) Patentinhaber: Thermoplast Composite GmbH, 91474 Langenfeld (DE)
(72) Erfinder: BÖRGER, Herbert, 91474 Langenfeld (DE)
(74) Vertreter: Rau, Schneck & Hübner
(86) Internationale Anmeldenummer: PCT/EP2012/053866
(87) Internationale Veröffentlichungsnummer: WO 2012/123302

(56) Entgegenhaltungen:
- JP-A- 3 251 408
- JP-A- 10 166 362
- JP-A- 62 073 916

## Beschreibung

Die Erfindung betrifft ein Verfahren sowie eine Vorrichtung zur Herstellung eines Faserverbundwerkstoffes in Form eines mit einem Polymer imprägnierten Faserbandes.

Verfahren und Vorrichtungen zur Bearbeitung bzw. Herstellung eines Faserbandes sind bekannt aus der JP 2 688 845 B2, der JP 03 146777 A, der JP 03 251 408 A, der WO 2009/074490 A1, der US 2005/0221085 A1, der JP 2007-076224 A, der JP 2008-246782 A, der US 3,422,796 A, der US 4,059,068 A, der EP 0 397 506 A2, der US 5,798,068 A, der US 4,588,538 A, der US 3,873,389 A, der US 3,993,726 A, der DE 25 07 675 A1, der US 4,300,878 A und der US 7,571,524 B2.

Die Druckschrift JP-A-62073916 offenbart eine Vorrichtung zum Imprägnieren eines Faserbandes unter Verwendung einer Druckplatte, welche senkrecht zur Bandebene vibriert.

Es ist eine Aufgabe der vorliegenden Erfindung, ein Verfahren bzw. eine Vorrichtung der eingangs genannten Art derart weiterzubilden, dass eine Imprägnierung eines Faserbandes bei vorgegebener Imprägnierungsqualität mit möglichst geringem Herstellungsaufwand erfolgt.

Diese Aufgabe ist erfindungsgemäß gelöst durch ein Verfahren mit den im Anspruch 1 angegebenen Merkmalen und durch eine Vorrichtung mit den im Anspruch 7 angegebenen Merkmalen.

Erfindungsgemäß wurde erkannt, dass ein Schmelzauftrag mit nachfolgender Druck-Scher-Vibrationsbeaufschlagung, solange das Roh-Faserband eine Temperatur oberhalb des Polymer-Schmelzpunktes hat, zu einem wirksamen Einarbeiten der Polymerschmelze in die gesamte FaserVolumenstruktur des Roh-Faserbandes führt. Durch die Druck-Scher-Vibrationsbeaufschlagung werden Gasvolumina, die sich noch innerhalb des Roh-Faserbandes befinden, effizient ausgetrieben. Das Verfahren kann kontinuierlich durchgeführt werden. Verfahrensprodukt kann ein imprägniertes Endlos-Faserband sein. Als Ausgangsprodukt kann ein Endlos-Roh-Faserband Verwendung finden. Das Halten des Roh-Faserbandes auf einer Temperatur oberhalb des Polymer-Schmelzpunktes stellt sicher, dass das Polymer nicht unerwünscht vor dem vollständigen Eindringen und Teilen innerhalb und auf dem Roh-Faserband erstarrt. Dieses Beibehalten einer Temperatur oberhalb des Polymer-Schmelzpunktes kann nach Abschluss der Druck-Scher-Vibrationsbeaufschlagung noch während eines Beruhigungsintervalls fortgesetzt werden. Nach dem Durchführen der angegebenen Verfahrensschritte kann das hergestellte, imprägnierte Faserband definiert abgekühlt werden. Das Faserband kann eine Vielzahl von Endlos-Fasem aufweisen. Alternativ oder zusätzlich ist es möglich, dass als Faserband ein Gewebeband zum Einsatz kommt, bei dem auch anders als in Längsrichtung orientierte Einzelfasern vorhanden sind. Auch ein sonstiges, bandförmiges Fasergebilde, beispielsweise aus einem Non-Woven Fabric, oder ein Textilgebilde kann als Faserband zum Einsatz kommen. Aufgrund der Druck-Scher-Vibrationsbeaufschlagung kann eine geringe bis nicht vorhandene Schädigung der Fasern bei guter Polymerdurchdringung des Faserbandes, also bei guter Imprägnierung, realisiert werden.

Eine Kraftbeaufschlagung nach Anspruch 2 ermöglicht ein erwünschtes "Öffnen" der das Roh-Faserband aufbauenden Rovings. Die Filamente bzw. Einzelfasern innerhalb der Rovings, die über das Schlichtmittel aneinander haften, werden dabei voneinander gelöst, sodass zwischen diese Einzelfasern die Polymerschmelze eindringen kann. Die Kraftbeaufschlagung kann erfolgen, nachdem die Rovings zum Roh-Faserband zusammengeführt wurden.

Eine Bereitstellung des Roh-Faserbandes nach Anspruch 3 ist besonders zur Herstellung eines Endlos-Faserbandes geeignet.

Ein Auftragen des Polymers nach Anspruch 4 vermeidet eine aufwändige Abdichtung einer unter Druck stehenden Auftragskammer nach außen. Überraschend hat sich herausgestellt, dass die erfindungsgemäße Druck-Scher-Vibrationsbeaufschlagung einen Polymerauftrag unter Normal-Umgebungsdruck ermöglicht.

Eine mehrfache Druck-Scher-Vibrationsbeaufschlagung nach Anspruch 5 erhöht die Effizienz des Herstellungsverfahrens. Quer-Bewegungskomponenten der verschiedenen Druck-Scher-Vibrationsbeaufschlagungseinrichtungen können synchronisiert gegenläufig, also im Gegentakt, gesteuert werden. Zwischen den hintereinander erfolgenden Druck-Scher-Vibrationsbeaufschlagungen kann gezielt jeweils ein Beruhigungsintervall vorgesehen sein, bei dem das Roh-Faserband während einer vorgegebenen Zeitspanne nicht mit Druck und/oder Scher-Vibration beaufschlagt ist.

Eine Druck-Scher-Vibrationsbeaufschlagung nach Anspruch 6 von beiden Seiten her kann durch Druckbeaufschlagungseinrichtungen erfolgen, die im Bearbeitungsweg nacheinander angeordnet sind. Alternativ ist eine gleichzeitige Druck-Scher-Vibrationsbeaufschlagung von beiden Seiten her möglich. Auch die Druck-Scher-Vibrationsbeaufschlagung von beiden Seiten her kann mit einer synchronisierten Gegenläufigkeit der Quer-Bewegungskomponenten, also im gesteuerten Gegentakt, erfolgen.

Die Vorteile einer Vorrichtung nach Anspruch 7 entsprechen denen, die vorstehend unter Bezugnahme auf das erfindungsgemäße Verfahren bereits erläutert wurden. Zum Abziehen von Rovings kann ein Spulengatter mit Spulen eingesetzt sein, auf denen die einzelnen Rovings aufgewickelt sind. Die Herstellungsvorrichtung kann eine Zusammenführeinrichtung zum Zusammenführen der Rovings zum Roh-Faserband aufweisen. Längs des Bearbeitungsweges können gezielt Umlenkelemente zum Umlenken des Roh-Faserbandes vorgesehen sein. Die Umlenkelemente können beheizt sein. Die Herstellungsvorrichtung kann eine Abkühleinrichtung nach Abschluss der Druck-Scher-Vibrationsbeaufschlagung und eines ggf. noch nachfolgenden Beruhigungsintervalls aufweisen. Die Abkühleinrichtung kann als Walzenpaar ausgeführt sein und kann zusätzliche Kühlplatten aufweisen. In die Druck-Scher-Vibrationsbeaufschlagungseinrichtung kann eine Temperiereinrichtung zum Halten des Roh-Faserbandes auf eine Temperatur oberhalb des Polymer-Schmelzpunktes integriert sein. Eine solche Temperiereinrichtung kann beispielsweise an den Gegendruckkörper angekoppelt sein. Frequenzen der Druck-Scher-Vibrationsbeaufschlagung können im Bereich zwischen 1 Hz und 40 kHz liegen. Amplituden der Scher-Vibrationsbeaufschlagung können im Bereich zwischen 0,1 mm und 5 mm liegen. Ein Druck der Druck-Scher-Vibrationsbeaufschlagung kann im Bereich zwischen 0,01 MPa und 2 MPa liegen.

Eine Scherkraft-Beaufschlagungseinrichtung nach Anspruch 8 ermöglicht ein effizientes "Öffnen" des Roh-Faserbandes. Die Scherkraft-Beaufschlagungseinrichtung kann eine Mehrzahl von hintereinander im Bearbeitungsweg des Roh-Faserbandes angeordnete Walzen aufweisen, über die das Roh-Faserband im Zick-Zack geführt ist. Die Scherkraft-Beaufschlagungseinrichtung kann auch nach einer Zusammenführung der das Roh-Faserband bildenden Rovings angeordnet sein. Die Scherkraft wirkt bei der Scher-Beaufschlagungseinrichtung in der Regel mit Kraftkomponente quer zur Bandebene des Faserbandes. Diese Wirkrichtung ist anders als die Haupt-Wirkrichtung bei der Druck-Scher-Vibrationsbeaufschlagung, bei der die Scherung hauptsächlich in der Bandebene erfolgt.

Eine Breitschlitzdüse nach Anspruch 9 ermöglicht einen effizienten Auftrag der Polymerschmelze auf das Roh-Faserband. Die Breitschlitzdüse kann am Ausgang eines Extruders zum Aufschmelzen des Polymers angeordnet sein. Es können zwei einander auf beiden Seiten der Bandebene gegenüberliegende Breitschlitzdüsen vorgesehen sein, über die die Polymerschmelze auf das Roh-Faserband von beiden Seiten her aufgetragen wird.

Ein Druck-Scher-Vibrationsstempel nach Anspruch 10 führt zu einem effektiven Einarbeiten der Polymerschmelze in das Roh-Faserband. Ein Profil des Stempelkopfes kann symmetrisch ausgeführt sein, sodass der Einlaufabschnitt und der Auslaufabschnitt die gleiche Profilierung aufweisen. Alternativ ist auch eine asymmetrische Profilierung des Stempelkopfes möglich.

Die Druck-Scher-Vibrationsstempel nach Anspruch 12 haben gleichzeitig die Funktion der Gegendruckkörper.

Ein Gegendruckkörper nach Anspruch 13 führt gleichzeitig zu einer gewünschten Temperierung des Roh-Faserbandes oberhalb des Polymer-Schmelzpunktes.

Ausführungsbeispiele der Erfindung werden nachfolgend anhand der Zeichnungen näher erläutert. In dieser zeigen:
- Fig. 1: eine Seitenansicht einer Vorrichtung zur Herstellung eines Faserverbundwerkstoffes in Form eines mit einem Polymer imprägnierten Faserbandes;
- Fig. 2: perspektivisch einen Ausschnitt der Vorrichtung nach Fig. 1, aus dem Details einer Führung des Faserbandes deutlicher hervorgehen;
- Fig. 3: eine Ausschnittsvergrößerung aus Fig. 1 im Bereich zweier hintereinander angeordneter Vibrations-Druckbeaufschlagungseinrichtungen der Herstellungsvorrichtung;
- Fig. 4: eine perspektivische Detailansicht einer der Druck-Scher-Vibrationsbeaufschlagungseinrichtungen;
- Fig. 5: eine Seitenansicht einer der Druck-Scher-Vibrationsbeaufschlagungseinrichtungen ;
- Fig. 6: schematisch und gebrochen in einer der Fig. 5 entsprechenden Seitenansicht ein alternatives Profil eines Druck-Scher-Vibrationsstempels für die Druck-Scher-Vibrationsbeauf schlagungseinrichtung;
- Fig. 7: eine Detailansicht einer der Druck-Scher-Vibrationsbeauf schlagungseinrichtungen aus einer weiteren Perspektive; und
- Fig. 8: perspektivisch Details einer Variante einer Druck-Scher-Vibrationsbeaufschlagungseinrichtung im Bereich zweier gegenüberliegender Druck-Scher-Vibrationsstempel.

Eine Vorrichtung 1 dient zur Herstellung eines Faserverbundwerkstoffes in Form eines mit einem Polymer imprägnierten Faserbandes 2, das auch als Tape bezeichnet wird.

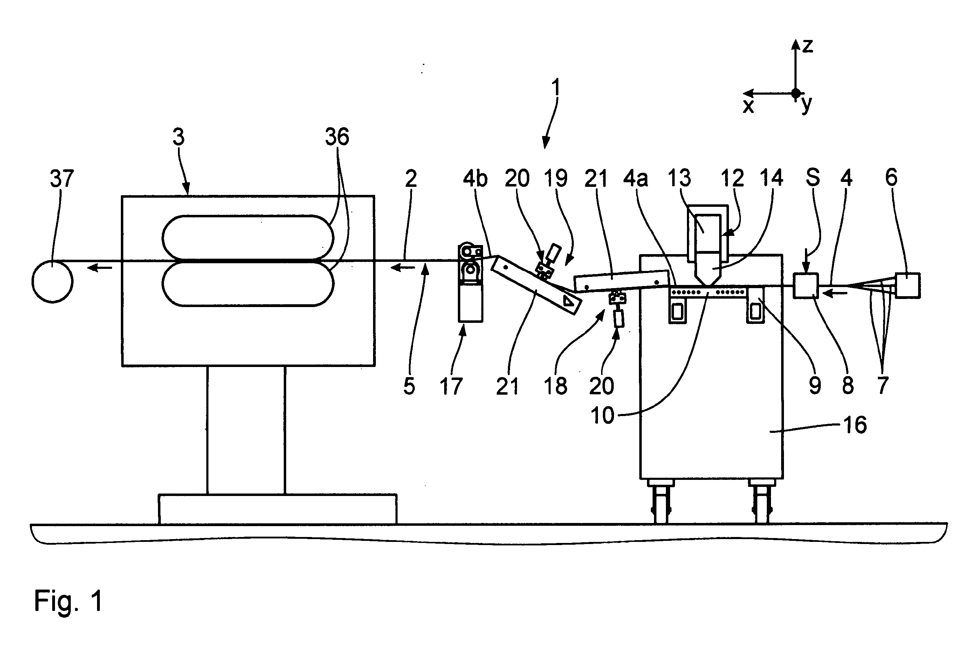

Die Herstellungsvorrichtung 1 hat eine Transporteinrichtung 3 zum Zuführen eines Roh-Faserbandes 4 zu Bearbeitungskomponenten der Herstellungsvorrichtung 1 und zum Transportieren des Faserbandes 4, 2, also zunächst des Roh-Faserbandes 4 und später des hergestellten, imprägnierten Faserbandes 2, längs eines Bearbeitungsweges 5. Solange noch nicht der End-Bearbeitungszustand, also das Tape (Faserband 2), erreicht ist, wird nachfolgend der Begriff Roh-Faserband (Faserband 4) verwendet. Eine Transportgeschwindigkeit des Faserbandes 2, 4 längs des Bearbeitungswegs 5, die über die Transporteinrichtung 3 vorgegeben ist, liegt im Bereich zwischen 2,5 m/min bis 25 m/min, insbesondere im Bereich ab 7,5 m/min bis 25 m/min. Eine Förderrichtung des Faserbandes 4, 2 längs des Bearbeitungsweges 5 ist in der Fig. 1 durch mehrere Pfeile angedeutet.

Das Roh-Faserband 4 hat eine Breite in der y-Richtung im Bereich zwischen einigen Millimetern und 300 mm. Auch noch größere Breiten des Roh-Faserbandes 4 in der y-Richtung sind möglich. Das Roh-Faserband 4 hat in der z-Richtung eine Stärke von etwa 0,5 mm. Als Fasermaterial für das Roh-Faserband 4 kann Glasfaser, Kohlefaser, Aramid, Basalt, Polyester oder Naturfaser zum Einsatz kommen.

Der Bearbeitungsweg 5 beginnt an den in der Fig. 1 nicht dargestellten Spulen eines schematisch dargestellten Spulengatters 6. Von dort werden Rovings 7 bzw. Fasergarne, die auf mehreren Roving-Spulen des Spulengatters 6 bereitgestellt werden, mithilfe der Transporteinrichtung 3 abgezogen und zum Roh-Faserband 4 in nicht näher dargestellter Weise zusammengeführt. Bei den Rovings 7 handelt es sich um endlose Multi-Filamente ohne Drall. Auf den Spulen des Spulengatters 6 sind jeweils mehrere Kilogramm der Rovings 7 aufgespult. Die Spulen des Spulengatters 6 werden mit konstanter Spannung abgezogen. Der Zusammenführeinrichtung werden die Rovings 7 verdrehungsfrei zugeführt. Beim Zusammenführen werden die Rovings 7 zum Roh-Faserband 4 nebeneinandergelegt. Das Roh-Faserband 4 hat über seine Breite, also über die y-Dimension, innerhalb eines vorgegebenen Toleranzbereiches konstante Faserdichte.

Die Rovings 7 des Roh-Faserbandes 4 sind mit einem Schlichtmittel, der sogenannten Schlichte, behandelt. Nach dem Zusammenführen der Rovings zum Roh-Faserband 4 durchläuft dieses eine Öffnungseinrichtung 8, die in der Fig. 1 ebenfalls schematisch dargestellt ist. Die Öffnungseinrichtung 8 stellt eine Scherkraft-Beaufschlagungseinrichtung dar. Dort wird das Roh-Faserband zunächst zum Voneinanderlösen von Einzelfilamenten innerhalb der einzelnen Rovings 7 gezielt mit einer Scherkraft S mit Kraftkomponente senkrecht zu einer Bandebene beaufschlagt. Die Öffnungseinrichtung 8 kann, wie in der Figur 1 angedeutet, nach dem Zusammenführen der Rovings im Bearbeitungsweg 5, alternativ aber auch vor dem Zusammenführen der Rovings, angeordnet sein.

Zur Verdeutlichtung von Lagebeziehungen wird nachfolgend ein kartesisches xyz-Koordinatensystem verwendet. Die x-Richtung verläuft in der Fig. 1 nach links. Die y-Richtung verläuft in der Fig. 1 senkrecht zur Zeichenebene und aus dieser heraus. Die z-Richtung verläuft in der Fig. 1 nach oben.

Die Öffnungseinrichtung 8 kann durch mehrere, hintereinander angeordnete Walzen realisiert sein, die in der y-Richtung, also quer zur Band-Laufrichtung x verlaufen und die vom Roh-Faserband 4 mäanderförmig oder im Zick-Zack umlaufen werden.

Ab dem Zusammenführen der Rovings wird das Roh-Faserband 4, das in diesem Bearbeitungsstadium auch als trockenes Faserband bezeichnet wird, zunächst parallel zur x-Richtung gefördert. Die Bandebene des Roh-Faserbandes 4 verläuft parallel zur xy-Ebene.

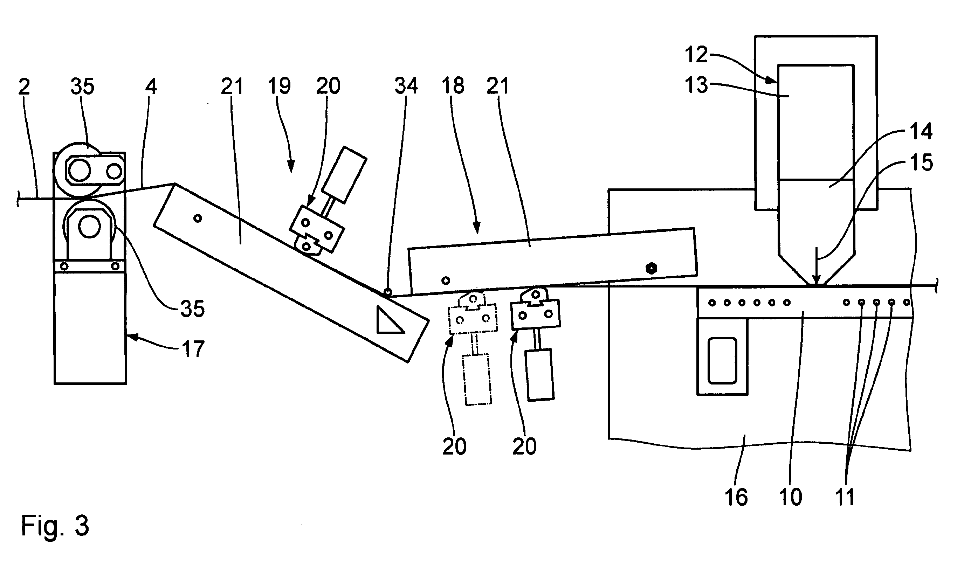

Nach der Öffnungseinrichtung 8 und nach dem Zusammenführen der Rovings zum Roh-Faserband 4 wird dieses parallel zur x-Richtung an einer Kontakt-Vorheizeinrichtung 9 vorbeigeführt. Diese hat einen Kontaktkörper 10 (vgl. Fig. 3), der über eine Heizeinheit mit Heizelementen 11 auf eine Soll-Vorheiztemperatur geheizt ist. Die Heizelemente 11 sind in Form mehrerer im Bearbeitungsweg 5 hintereinander und quer zum Bearbeitungsweg verlaufender Heizstäbe ausgebildet, die gemeinsam den Kontaktkörper 10 bilden. Längs des Kontaktkörpers 10 steht das Roh-Faserband 4 mit diesem in wärmeübertragendem; mechanischem Kontakt. Die Soll-Vorheiztemperatur ist so gewählt, dass das Roh-Faserband 4 durch Kontakt mit dem Kontaktkörper 10 auf eine Bearbeitungstemperatur vorgeheizt wird, die höher ist als ein Schmelzpunkt des Imprägnierungs-Polymers.

Auf der dem Kontaktkörper 10 der Kontakt-Vorheizeinrichtung 9 gegenüberliegenden Seite des Roh-Faserbandes 4 ist eine Auftragseinrichtung 12 angeordnet. Die Auftragseinrichtung 12 dient zum Auftragen des in einem Schmelzvolumen 13 vorgehaltenen Polymers auf einer gesamten y-Breite des Roh-Faserbandes 4 auf eine Oberfläche 13a des Roh-Faserbandes 4.

Als Imprägnier-Polymer kann ein Thermoplast zum Einsatz kommen. Beispiele hierfür sind PE (Polyethylen), PP (Polypropylen), andere Polyolefine sowie Blends dieser Polyolefine, SAN (Styrol/Acrylnitril), PA (Polyamid), zum Beispiel PA 6, PA 6.6, PA 6.6T, PA 12, PA 6.10, ASA (Acrylnitril/Styrol/Acrylester), PC (Polycarbonat), PBT (Polybutylenterephthalat), PET (Polyethylentrephthalat), PPS (Polyphenylensulfid), PSU (Polysulfon), PES (Polyethersulfon), PEEK (Polyetheretherketon) oder Polymerblends, zum Beispiel PC/PBT. Als Imprägnier-Polymer kann auch ein Duroplast zum Einsatz kommen, welches als Schmelze im B-Stadium (Resitol) aufgetragen werden kann.

Die Auftragseinrichtung 12 hat eine Breitschlitzdüse 14. Letztere steht über einen Düsenkanal 15 mit dem Schmelzvolumen 13 in Fluidverbindung. Das Schmelzvolumen 13 stellt ein Austrittsvolumen eines Extruders 16 der Herstellungsvorrichtung 1 dar. Aufgrund der Vorheizung des Roh-Faserbandes 4 durch die Kontakt-Vorheizeinrichtung 9 und aufgrund einer weiteren Heizung des Faserbandes 4, 2 über zusätzliche Temperiereinrichtungen bleibt das aufgetragene Imprägnier-Polymer auf dem Roh-Faserband 4 während des weiteren Verlaufs des Bearbeitungswegs 5 bis zu einer vor der Transporteinrichtung angeordneten Abkühleinrichtung 17 auf einer Bearbeitungstemperatur, die höher ist als ein Schmelzpunkt des Imprägnier-Polymers.

Nach dem Auftrag des Imprägnier-Polymers wird das Roh-Faserband 4 auch als beschichtetes Faserband oder als polymerbeschichtetes Faserband 4a bezeichnet.

Die Breitschlitzdüse 14 ist bei der Anordnung nach Fig. 1 oberhalb des Roh-Faserbandes 4 und der Kontaktkörper 10 ist unterhalb des Roh-Faserbandes 4 angeordnet.

Der Auftrag der Polymer-Schmelze über die Breitschlitzdüse 14 auf das Roh-Faserband 4 erfolgt ohne Polymerüberschuss, sodass eine Verteilung der Polymer-Schmelze auf die gesamte Oberfläche des Roh-Faserbandes 4, also insbesondere über die gesamte y-Breite des Roh-Faserbandes 4, innerhalb vorgegebener Toleranzen gleichmäßig ist.

In einer Umgebung des Auftragsortes des geschmolzenen Imprägnier-Polymers auf das Roh-Faserband 4 herrscht Normaldruck. Sobald das Imprägnier-Polymer die Breitschlitzdüse 14 verlassen hat, liegt das Imprägnier-Polymer also nicht mehr unter Überdruck vor.

Der Auftragseinrichtung 12 sind im weiteren Bearbeitungsweg 5 des Roh-Faserbandes 4 zwei Druck-Scher-Vibrationsbeaufschlagungseinrichtungen 18, 19 hintereinander angeordnet. Die beiden Druck-Scher-Vibrationsbeaufschlagungseinrichtungen 18, 19 sind, abgesehen von ihrer räumlichen Lage, gleich aufgebaut, weswegen es nachfolgend genügt, die erste Druck-Scher-Vibrationsbeaufschlagungseinrichtung 18 näher zu beschreiben.

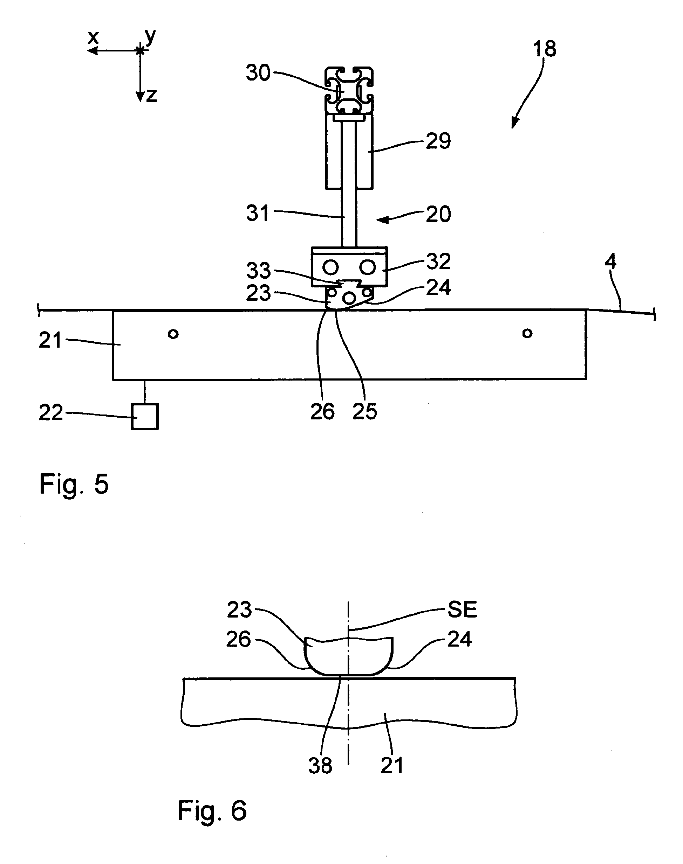

Fig. 5 zeigt die Hauptkomponenten der Druck-Scher-Vibrationsbeaufschlagungseinrichtung 18. Diese hat einen Druck-Scher-Vibrationsstempel 20. Dieser dient zum Aufbringen eines Drucks (Druckkraft F_{D}) auf das polymerbeschichtete Roh-Faserband 4 senkrecht zu dessen Bandebene. Der Druck-Scher-Vibrationsstempel 20 übt den Druck in etwa in positiver z-Richtung aus. Gleichzeitig zu der Druckbeaufschlagung erfolgt eine Scher-Vibrationsbeaufschlagung des Druck-Scher-Vibrationsstempels 20 mit einer Vibrations-Bewegungskomponente in der y-Richtung, also mit einer Vibrations-Bewegungskomponente in der Bandebene und quer zur Band-Laufrichtung (x-Richtung).

Als Schwingungsantrieb für die Vibration in der y-Richtung kann eine Exzenter-Mechanik, kann eine Pendelhub-Mechanik, kann ein Pneumatikzylinder, kann ein Hydraulikzylinder, kann ein elektromagnetischer Erreger oder kann ein piezoelektrischer Erreger zum Einsatz kommen.

Bei der Bearbeitung durch die Scher-Vibrationsbeaufschlagungeinrichtung 18 ist das Roh-Faserband 4 zwischen dem Druckstempel 20 und einem Gegendruckkörper 21 geführt. Der Gegendruckkörper 21 wird mittels einer in der Fig. 5 dargestellten Temperiereinrichtung 22 wiederum auf eine SollTemperatur geheizt, sodass das Roh-Faserband 4 dort, wo es mit dem Gegendruckkörper 21 in Kontakt kommt, auf einer Bearbeitungstemperatur gehalten wird, die höher ist als der Schmelzpunkt des Imprägnierungs-Polymers. Das Roh-Faserband 4 wird also insbesondere bis nach Abschluss der Druck-Scher-Vibrationsbeaufschlagung auf dieser Bearbeitungstemperatur bzw. einem Bearbeitungstemperaturbereich gehalten, der höher ist als der Schmelzpunkt des Imprägnierungs-Polymers.

Der Druck-Scher-Vibrationsstempel 20 hat einen Stempelkopf 23, der bei der Druck-Scher-Vibrationsbeaufschlagung mit dem Roh-Faserband 4 in Kontakt kommt. Der Stempelkopf 23 wird auch als Stempelschuh bezeichnet. Eine Kontaktfläche des Stempelkopfes 23 ist profiliert und hat längs des Bearbeitungsweges 5 einen Einlaufabschnitt 24, einen Druck-Scher-Vibrationsbeaufschlagungsabschnitt 25 und einen Auslaufabschnitt 26. Der Einlaufabschnitt 24 ist als Schrägfläche gestaltet, sodass sich ein Abstand zwischen dem Stempelkopf 23 und dem Roh-Faserband 4 in der Förderichtung längs des Bearbeitungsweges 5 kontinuierlich verringert. Der Druck-Scher-Vibrationsbeaufschlagungsabschnitt 25 ist plan ausgeführt und verläuft parallel zu einer ebenfalls plan ausgeführten Kontaktfläche 27 des Gegendruckkörpers 21. Der Auslaufabschnitt 26 ist ebenfalls als Schrägfläche und so gestaltet, dass sich ein Abstand zwischen dem Stempelkopf 23 und dem Roh-Faserband 4 in der Förderrichtung längs des Bearbeitungsweges 5 kontinuierlich vergrößert. Insgesamt ist der Stempelkopf 23 konvex ausgeführt.

Die Druck-Scher-Vibrationsbeaufschlagung über die Druck-Scher-Vibrationsstempel 20 erfolgt über die gesamte Breite des Roh-Faserbandes 4 und erfolgt quer zur Band-Laufrichtung.

Eine Druckkraft F_{D} der Druck-Scher-Vibrationsbeaufschlagungseinrichtung 18 wird erzeugt von einem Druckkolben 28 einer Druckquelle 29 in Form eines Pneumatikzylinders. Der vom Stempelkopf 23 auf das Roh-Faserband ausgeübte Druck liegt im Bereich zwischen 0,01 und 2 MPa.

Eine Vibration des Stempelkopfes 23 in +/-y-Richtung erfolgt mit einer vorgebbaren Frequenz im Bereich zwischen 1 Hz bis 40 kHz. Eine Vibrationsamplitude des Stempelkopfes 23 in der y-Richtung beträgt 5 mm (+/-2,5 mm). Bei der dargestellten Ausführung ist die Vibrationsamplitude 5 mm und die Vibrationsfrequenz 5 Hz.

Der Stempelkopf 23 wird an einem Tragkörper 30 der Druck-Scher-Vibrationsbeaufschlagungseinrichtung 18 über zwei längs der z-Richtung verlaufende Führungsstangen 31 beweglich geführt.

Eine Vibrationsbeaufschlagung des Stempelkopfes 23 kann mithilfe eines Piezoantriebs erfolgen, der in einem Ankoppelkörper 32 untergebracht ist, mit dem der Stempelkopf 23 über eine Schwalbenschwanz-Führung 33 mechanisch verbunden ist.

Zwischen den beiden Druck-Scher-Vibrationsbeaufschlagungseinrichtungen 18 wird das Roh-Faserband 4 über eine Umlenkkante, die entweder vom Gegendruckkörper 21 der Druck-Scher-Vibrationsbeaufschlagungseinrichtung 18 oder von einem in der Fig. 3 schematisch dargestellten Umlenkelement 34 gebildet wird, umgelenkt. Das Umlenkelement 34 kann als beheizter Dorn ausgeführt sein. Längs des Bearbeitungsweges 5 des polymerbeschichteten Roh-Faserbandes 4 können mehrere solcher Umlenkelemente 34 vorgesehen sein.

Die Druck-Scher-Vibrationsstempel 20 der beiden Druck-Scher-Vibrationsbeaufschlagungseinrichtungen 18, 19 liegen einander in Bezug auf die Bandebene des Roh-Faserbandes 4 längs dem Bearbeitungsweg 5 derart gegenüber, dass die Druck-Scher-Vibrationsbeaufschlagung eines längs des Bearbeitungswegs 5 geförderten Abschnitts des Roh-Faserbandes 4 nach dem Auftrag des Imprägnierungs-Polymers von beiden Seiten des Roh-Faserbandes 4 her durch die beiden Druck-Scher-Vibrationsstempel 20 der beiden Druck-Scher-Vibrationsbeaufschlagungseinrichtungen 18, 19 erfolgt.

Bei einer alternativen Ausgestaltung der Druck-Scher-Vibrationsbeaufschlagung können auch im Bearbeitungsweg 5 nacheinander auf der gleichen Seite des Roh-Faserbandes 4 angeordnete Druck-Scher-Vibrationsstempel 20 vorgesehen sein. Eine solche Ausführung ist in der Fig. 3 gestrichelt angeordnet.

Nach Abschluss der Druck-Scher-Vibrationsbeaufschlagung wird das Roh-Faserband 4 auch als imprägniertes Faserband 4b bezeichnet.

Die Abkühleinrichtung 17 hat zwei gegeneinander ablaufen Kühl-Kalibrier-Rollen 35, zwischen denen das imprägnierte Faserband hindurchläuft. Nach dem Hindurchlaufen durch die Rollen 35 ist aus dem imprägnierten Roh-Faserband 4 das fertig imprägnierte Faserband 2 geworden. Aufgrund der Abkühlung des Faserbandes 2 auf eine Temperatur unterhalb des Polymer-Schmelzpunktes ist das Faserband 2 verfestigt, also konsolidiert.

Durch die beiden Kühl-Kalibrier-Rollen 35 kann das Faserband 2 mit oder ohne Breitenbegrenzung, also mit oder ohne seitliche Begrenzung in der y-Richtung geführt werden. Im Anschluss an die beiden Rollen 35 kann die Abkühleinrichtung 17 noch Kühlplatten aufweisen, die in der Zeichnung nicht dargestellt sind und mittels derer das Faserband 2 drucklos eine weitere Abkühlung erfährt.

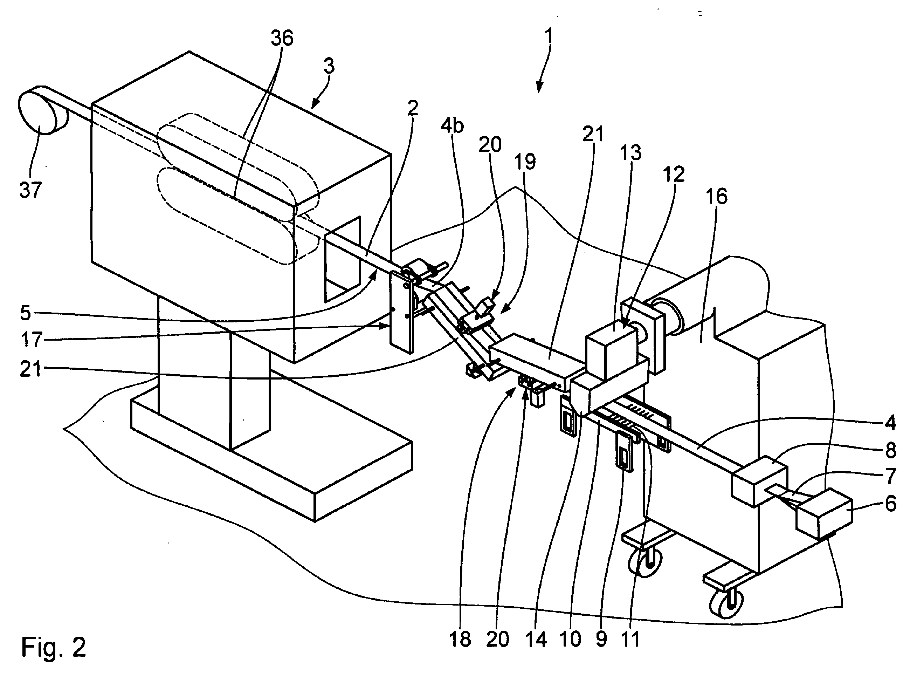

Das Faserband 2 durchläuft nach der Abkühleinrichtung 17 zwei mit gegenläufigem Drehsinn umlaufende Endlos-Transportbänder 36 der Transporteinrichtung 3. Nach Durchlaufen der Transporteinrichtung 3 wird das imprägnierte Faserband 2 über eine in der Fig. 2 schematisch dargestellte Rolle 37 aufgewickelt.

Bei der Herstellung des mit dem Imprägnierungs-Polymer imprägnierten Faserbandes 2 werden zunächst die Spulen am Spulengatter 6 mit den einzelnen Rovings bereitgestellt. Nach dem Abziehen der Rovings werden diese zum Roh-Faserband 4 zusammengeführt und mit der Öffnungseinrichtung 8 geöffnet. Das Öffnen bewirkt, dass das Imprägnier-Polymer zwischen die Einzelfasern eindringen kann, ohne durch aufgrund der Schlichte zusammen gebackene Roving-Bereiche daran gehindert zu werden. Das Roh-Faserband 4 wird dann mit der Kontakt-Vorheizeinrichtung 9 zunächst auf die Bearbeitungstemperatur vorgeheizt, die höher ist als der Schmelzpunkt des Imprägnierungs-Polymers. Anschließend wird mit der Auftragseinrichtung 12 das geschmolzene Imprägnierungs-Polymer auf der gesamten Breite des Roh-Faserbandes 4 auf dessen Oberfläche 13a aufgetragen. Dieses Auftragen erfolgt, während das Roh-Faserband unter Normal-Umgebungsdruck längs des Bearbeitungswegs 5 mit der Transporteinrichtung 3 gefördert wird. Das aufgetragene, flüssige Imprägnierungs-Polymer dringt nun so weit in das Roh-Faserband 4 ein, bis im Roh-Faserband 4 eingeschlossene Luft ein weiteres und vollständiges Eindringen erschwert. Anschließend wird über die Druck-Scher-Vibrationsbeaufschlagungseinrichtung 18 in der Fig. 1 von unten her und darauf folgend mit der Druck-Scher-Vibrationsbeaufschlagungseinrichtung 19 in der Fig. 1 von oben her Druck auf das Roh-Faserband senkrecht zu dessen Bandebene mit den Druckstempeln 20 bei gleichzeitiger Scher-Vibrationsbeaufschlagung der Druck-Scher-Vibrationsstempel 20 aufgebracht. Eine Vibrations-Bewegungskomponente dieser Vibrationsbeaufschlagung verläuft in der y-Richtung, also in der xy-Bandebene und quer zur Band-Laufrichtung x. Bei der Vibrationsbeaufschlagung ist das Roh-Faserband 4 zwischen dem jeweiligen Druckstempel 20 und dem jeweiligen Druckgegenkörper 21 geführt. Während der Scher-Vibrationsbeaufschlagung halten die Temperiereinrichtungen 22 die Gegendruckkörper 21 und über den mechanischen Wärmekontakt hierüber das Roh-Faserband 4 auf der Bearbeitungstemperatur bis nach Abschluss der Druck-Scher-Vibrationsbeaufschlagung.

Eine Temperatur des Roh-Faserbandes 4 von 380 °C wird nicht überschritten. Bei bestimmten, besonders temperaturbeständigen Materialien kann auch eine höhere Heiztemperatur zum Einsatz kommen, beispielsweise 400° C. Auch noch höhere Heiztemperaturen für das Roh-Faserband 4 sind möglich.

Die Scherung der Polymer-Schmelze quer zu den Fasern des Roh-Faserbandes 4 bei der Druck-Scher-Vibrationsbeaufschlagung verbessert eine Benetzung der Einzelfasern auf einer Einwirkungsstrecke der Druck-Scher-Vibrationsbeaufschlagung. Diese Einwirkungsstrecke entspricht der Ausdehnung des Druck-Scher-Vibrationsbeaufschlagungsabschnitts 25 und liegt bei der Ausführung nach Fig. 5 im Bereich zwischen 10 mm und 50 mm.

Durch die Druck-Scher-Vibrationsbeaufschlagung wird das Roh-Faserband 4 effizient entlüftet, sodass das flüssige Imprägnier-Polymer in praktisch alle Zwischenräume zwischen den Einzelfilamenten der Rovings des Roh-Faserbandes 4 eindringen kann. Das Roh-Faserband 4 wird auf diese Weise vollständig und gleichmäßig und praktisch ohne verbleibenden Lufteinschluss imprägniert. Entsprechend ist eine Porosität, also ein Rest-Luftvolumen innerhalb des imprägnierten Faserbandes 2 im Verhältnis zum Faserbandvolumen, gering. Diese Porosität kann Werte im Bereich zwischen 0 und 10 Vol%, insbesondere zwischen 0 und 5 Vol%, einnehmen.

Nach der Imprägnierung beträgt der Fasergehalt 35 Vol% bis 65 Vol% innerhalb des Faserbandes 2.

Die Frequenz, die Amplitude und der Druck der Druck-Scher-Vibrationsbeaufschlagung stellen Parameter dar, die auf die jeweils zu bearbeitende Materialkombination abgestimmt sind. Eine Rolle spielt hierbei das Fasermaterial des Roh-Faserbandes 4, eine Stärke und eine Breite des Roh-Faserbandes 4, ein Durchmesser der Einzelfasern, das Material des Imprägnier-Polymers und eine Auftragsmenge des Imprägnier-Polymers pro Fläche des Roh-Faserbandes 4. Eine Rolle spielen prinzipiell die Eigenschaften der Rovings bzw. der Fasergarne, aus denen das Roh-Faserband 4 zusammengesetzt ist.

Durch die Druck-Scher-Vibrationsbeaufschlagung über die beiden Druckstempel von beiden Seiten des Roh-Faserbandes 4 her erfolgt eine wirksame Einarbeitung des Imprägnier-Polymers ins Innere des Roh-Faserbandes 4, also zwischen die im Volumen des Roh-Faserbandes 4 verlaufenden Fasern.

Zwischen den mehrmals hintereinander möglichen Druck-Scher-Vibrationsbeaufschlagungen verläuft das Roh-Faserband 4 längs des Bearbeitungsweges 5 ohne Druckbeaufschlagung, was auch als "Beruhigungsintervall" bezeichnet wird. In diesen Beruhigungsintervallen wird der Polymerschmelze Gelegenheit gegeben, sich gleichmäßig zwischen den Fasern des Roh-Faserbandes 4 zu verteilen.

Die Polymerschmelzeviskosität, also der Melt Flow Index (MFI) liegt im Bereich zwischen 10 und 150 g/min und insbesondere im Bereich zwischen 30 und 50 g/min. Auch MFI-Werte, die kleiner sind als 10 g/min sind möglich. Es können Polymerschmelzen mit MFI-Werten im Bereich zwischen 25 und 75 g/min und auch im Bereich zwischen 5 und 25 g/min, also relativ hochviskose, Polymerschmelzen verarbeitet werden.

Eine Differenz zwischen der Fasertemperatur und der Schmelzetemperatur beim Zusammentreffen der Polymerschmelze mit dem Roh-Faserband am Austritt der Breitschlitzdüse 14 liegt im Bereich zwischen -20 K und +50 K. Prinzipiell wird diese Differenz bei einem möglichst geringen Absolutwert gehalten.

Fig. 6 zeigt eine Variante einer Profilierung für die Stempelköpfe 23 der Druckstempel 20 der Druck-Scher-Vibrationsbeaufschlagungseinrichtungen 18 und 19. Komponenten, die denjenigen entsprechen, die vorstehend unter Bezugnahme auf die Druck-Scher-Vibrationsbeaufschlagungseinrichtungen 18, 19 bereits erläutert wurden, tragen die gleichen Bezugsziffern und werden nicht nochmals im Einzelnen diskutiert.

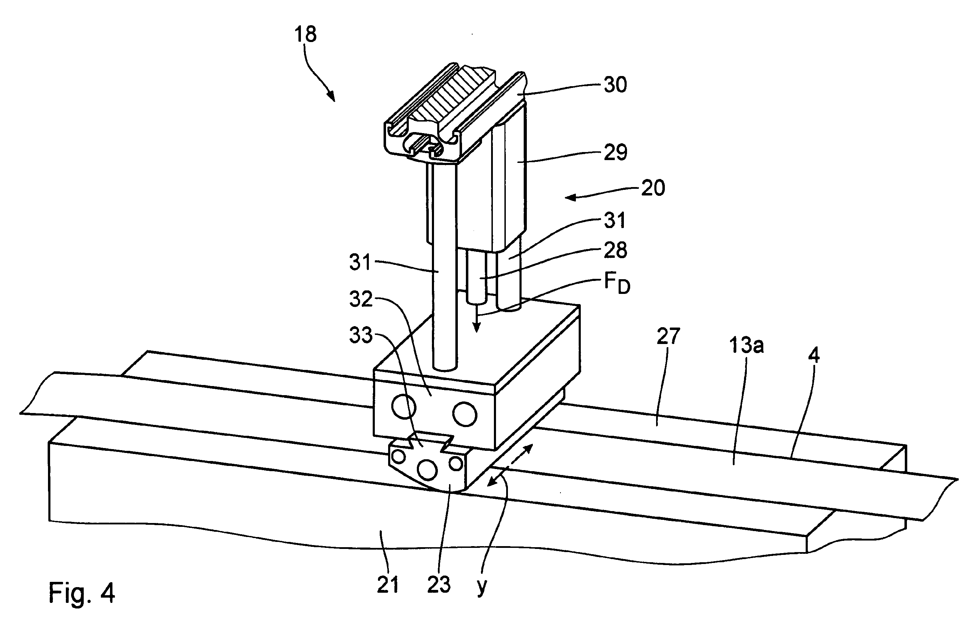

Das Profil des alternativen Druckstempels 23 ist, anders als das asymmetrische Profil des Druckstempels 23 nach den Fig. 1 bis 5, um eine zur yz-Ebene parallele Symmetrieebene SE spiegelsymmetrisch. Der Einlaufabschnitt 24 ist entsprechend genauso ausgeformt und profiliert wie der Auslaufabschnitt 26. Ein Druck-Scher-Vibrationsbeaufschlagungsabschnitt 38 des alternativen Druckstempels 23 ist plan und parallel zur Gegenfläche des Gegendruckkörpers 21 ausgeführt, wobei die x-Erstreckung des Druck-Scher-Vibrationsbeaufschlagungsabschnitts 38 größer ist als diejenige des Druck-Scher-Vibrationsbeaufschlagungsabschnitts 25 der Ausführung nach den Fig. 1 bis 5.

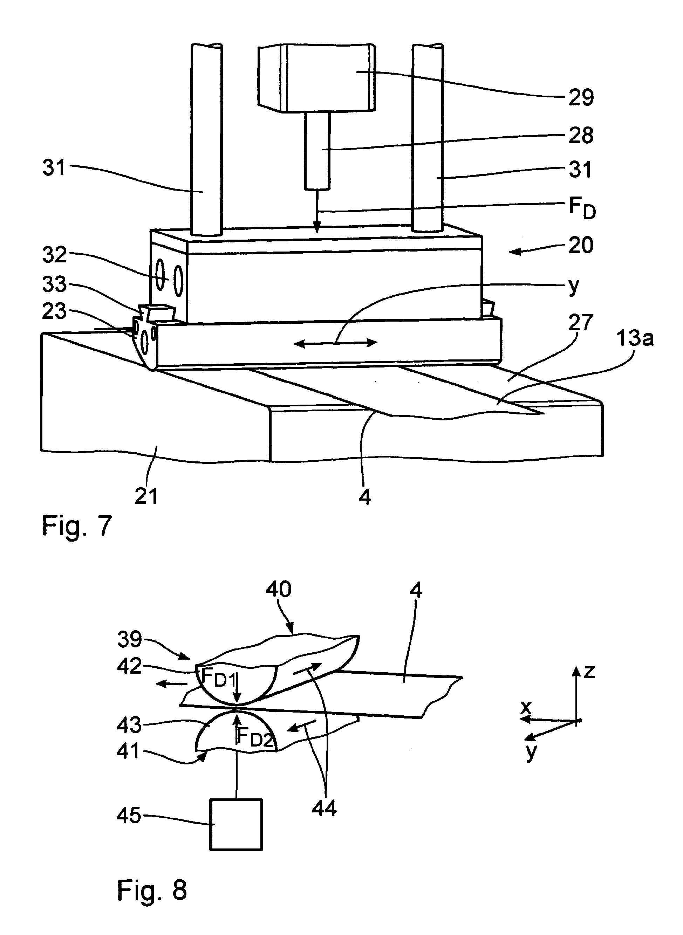

Fig. 8 zeigt eine alternative Variante einer Druck-Scher-Vibrationsbeauf schlagungseinrichtung 39, die anstelle der Druck-Scher-Vibrationsbeauf schlagungseinrichtungen 18, 19 zum Einsatz kommen kann. Dargestellt ist die Druck-Scher-Vibrationsbeaufschlagungseinrichtung 39 im Bereich zweier gegenüberliegender Druck-Scher-Vibrationsstempel 40, 41, wobei diese Darstellung gebrochen und perspektivisch ist. Die Druck-Scher-Vibrationsstempel 40, 41 haben zwei konvexe Stempelköpfe 42, 43. Zwischen diesen konvexen Stempelköpfen 42, 43 läuft das Roh-Faserband 4 hindurch. Der zwischen den beiden Stempelköpfen 42, 43 liegende Abschnitt des Roh-Faserbandes 4 wird von beiden Seiten her durch die gegenüberliegenden Druck-Scher-Vibrationsstempel 40, 41 einer Druck-Scher-Vibrationsbeaufschlagung unterzogen. Dabei übt der Stempelkopf 42 eine Druckkraft F_{D1} in negativer z-Richtung und der Stempelkopf 43 eine Druckkraft F_{D2} in positiver z-Richtung auf das Roh-Faserband 4 aus. Der Stempelkopf 43 stellt den Gegendruckkörper für den Stempelkopf 42 dar und umgekehrt. Jeder der Stempelköpfe 42, 43 übt einen absoluten Druck auf das Roh-Faserband 4 im Bereich zwischen 0,005 und 1 MPa aus.

Die Druck-Scher-Vibrationsbeaufschlagungseinrichtung 39 ist so ausgeführt, dass Quer-Bewegungskomponenten der Stempelköpfe 42, 43 der Druck-Scher-Vibrationsstempel 40, 41 synchronisiert gegenläufig bei der Druck-Scher-Vibrationsbeaufschlagung auf das Roh-Faserband 4 wirken. Die beiden Stempelköpfe 42, 43 arbeiten also im Gegentakt, wie dies durch längs der y-Richtung verlaufende Richtungspfeile 44 in der Fig. 8 angedeutet ist. Wenn der Stempelkopf 42 bei der Vibration in negativer y-Richtung ausgelenkt wird, wird der gegenüberliegende Stempelkopf 43 in positiver y-Richtung ausgelenkt und umgekehrt.

Eine entsprechende synchronisierte Gegenläufigkeit der Quer-Bewegungskomponenten (+/- y) der Druck-Scher-Vibrationsstempel 20 kann auch bei der Anordnung der Druckstempel 20 direkt hintereinander vorgegeben sein, die in der Fig. 3 gestrichelt angedeutet ist.

Zumindest einer der Stempelköpfe 42, 43 ist mit einer Temperiereinrichtung 45 nach Art der Temperiereinrichtung 22 für den Gegendruckkörper 21 ausgerüstet, sodass das Roh-Faserband 4 bei der Druck-Scher-Vibrationsbeaufschlagung mit der Druck-Scher-Vibrationsbeaufschlagungseinrichtung 39 auf der Bearbeitungstemperatur gehalten ist, die höher ist als der Schmelzpunkt des Imprägnier-Polymers.

## Patentansprüche

1. Verfahren zur Herstellung eines Faserverbundwerkstoffes in Form eines mit einem Polymer imprägnierten Faserbandes (2) mit folgenden Schritten:
- Bereitstellen eines Roh-Faserbandes (4) und Fördern des Roh-Faserbandes (4) längs eines Bearbeitungsweges (5),
- Vorheizen des Roh-Faserbandes (4) auf eine Bearbeitungstemperatur, die höher ist als ein Schmelzpunkt des Polymers,
- Auftragen des geschmolzenen Polymers auf einer gesamten Breite des Roh-Faserbandes (4) auf einer Oberfläche des Roh-Faserbandes (4),
- Aufbringen eines Drucks auf das Roh-Faserband (4) senkrecht zur Bandebene nach dem Auftragen des Polymers, wobei das Druckaufbringen mit mindestens einem Druckstempel (20) bei gleichzeitiger Scher-Vibrationsbeaufschlagung des Druckstempels (20) mit einer Vibrations-Bewegungskomponente (y) in der Bandebene und quer zu einer Band-Laufrichtung erfolgt,
- Halten des Roh-Faserbandes (4) innerhalb eines Bearbeitungstemperaturbereiches oberhalb des Polymer-Schmelzpunktes mindestens bis nach Abschluss der Druck-Scher-Vibrationsbeaufschlagung.

2. Verfahren nach Anspruch 1, **dadurch gekennzeichnet, dass** das bereitgestellte Roh-Faserband (4) aus einer Mehrzahl von zusammengeführten Rovings (7) gefertigt ist, wobei das mit einem Schlichtmittel behandelte Roh-Faserband (4) zunächst zum Voneinanderlösen von Einzelfilamenten innerhalb der einzelnen Rovings (7) gezielt mit einer Scherkraft mit Kraftkomponente senkrecht zur Bandebene beaufschlagt wird.

3. Verfahren nach Anspruch 1 oder 2, **gekennzeichnet durch** folgende Schritte zur Bereitstellung des Roh-Faserbandes (4):
- Bereitstellen einer Mehrzahl von Rovings (7) auf mehreren Roving-Spulen,
- Abziehen der Rovings (7) von den Roving-Spulen und Zusammenführen der Rovings (7) zum Roh-Faserband (4).

4. Verfahren nach einem der Ansprüche 1 bis 3, **dadurch gekennzeichnet, dass** das Auftragen des Polymers auf das Roh-Faserband (4) erfolgt, während das Roh-Faserband (4) unter Normal-Umgebungsdruck gefördert wird.

5. Verfahren nach einem der Ansprüche 1 bis 4, **dadurch gekennzeichnet, dass** die Druck-Scher-Vibrationsbeaufschlagung eines Abschnitts des Roh-Faserbandes (4) nach dem Polymerauftrag mehrmals hintereinander längs des Bearbeitungsweges (5) erfolgt.

6. Verfahren nach einem der Ansprüche 1 bis 5, **dadurch gekennzeichnet, dass** die Druck-Scher-Vibrationsbeaufschlagung eines Abschnitts des Roh-Faserbandes (4) nach dem Polymerauftrag von beiden Seiten der Bandebene her erfolgt.

7. Vorrichtung (1) zur Herstellung eines Faserverbundwerkstoffes in Form eines mit einem Polymer imprägnierten Faserbandes (2)
- mit einer Transporteinrichtung (3) zum Zuführen eines Roh-Faserbandes (4) und zum Transportieren des Faserbandes (2, 4) längs eines Bearbeitungsweges (5),
- mit einer Vorheizeinrichtung (9) zum Vorheizen des Roh-Faserbandes (4) auf eine Bearbeitungstemperatur, die höher ist als ein Schmelzpunkt des Polymers;
- mit einer Auftragseinrichtung (12) zum Auftragen des geschmolzenen Polymers auf einer gesamten Breite des Roh-Faserbandes (4) auf eine Oberfläche des Roh-Faserbandes (4),
- mit mindestens einer Druck-Scher-Vibrationsbeaufschlagungseinrichtung (18, 19; 39), die mindestens einen Druckstempel (20; 40, 41) aufweist, zum Aufbringen eines Drucks auf das Roh-Faserband (4) senkrecht zur Bandebene nach dem Auftragen des Polymers mit dem Druckstempel (20; 40, 41) bei gleichzeitiger Scher-Vibrationsbeaufschlagung des Druckstempels (20; 40, 41) mit einer Vibrations-Bewegungskomponente (y) in der Bandebene und quer zu einer Band-Laufrichtung, wobei das Roh-Faserband (4) zwischen dem Druckstempel (20; 40, 41) und einem Gegendruckkörper (21; 43, 42) geführt ist,
- mit mindestens einer Temperiereinrichtung (22, 34; 45) zum Halten des Roh-Faserbandes (4) innerhalb eines Bearbeitungstemperaturbereiches oberhalb des Polymer-Schmelzpunktes bis nach Abschluss der Druck-Scher-Vibrationsbeaufschlagung.

8. Vorrichtung nach Anspruch 7, **gekennzeichnet durch** eine im Bearbeitungsweg vor der Auftragseinrichtung (12) angeordneten Scherkraft-Beaufschlagungseinrichtung (8), die derart ausgeführt ist, dass das mit einem Schlichtmittel behandelte Roh-Faserband (4) zunächst zum Voneinanderlösen von Einzelfilamenten innerhalb einzelner Rovings (7) gezielt mit einer Scherkraft (S) mit Kraftkomponente senkrecht zu einer Bandebene (xy) beaufschlagt wird, insbesondere bevor die das Roh-Faserband (4) bildenden Rovings (7) zum Roh-Faserband (4) zusammengeführt werden.

9. Vorrichtung nach Anspruch 7 oder 8, **dadurch gekennzeichnet, dass** die Auftragseinrichtung (12) eine Breitschlitzdüse (14) aufweist.

10. Vorrichtung nach einem der Ansprüche 7 bis 9, **dadurch gekennzeichnet, dass** der Druck-Scher-Vibrationsstempel (20; 40, 41) einen Stempelkopf (23; 42, 43) mit einem Einlaufabschnitt (24), einen Druck-Scher-Vibrationsbeaufschlagungsabschnitt (25; 38) und einen Auslaufabschnitt (26) aufweist.

11. Vorrichtung nach einem der Ansprüche 7 bis 10, **gekennzeichnet durch** mehrere hintereinander längs des Bearbeitungsweges (5) angeordnete Druck-Scher-Vibrationsstempel (20).

12. Vorrichtung nach einem der Ansprüche 7 bis 11, **gekennzeichnet durch** gegenüberliegende Druck-Scher-Vibrationsstempel (40, 41), wobei die Druck-Scher-Vibrationsbeaufschlagung eines Abschnitts des Roh-Faserbandes (4) nach dem Polymerauftrag von beiden Seiten her durch die beiden gegenüberliegenden Druck-Scher-Vibrationsstempel (40, 41) erfolgt.

13. Vorrichtung nach einem der Ansprüche 7 bis 12, **dadurch gekennzeichnet, dass** der Gegendruckkörper (21; 43, 42) an eine Temperiereinrichtung (22) angekoppelt ist.

## Claims

1. Method for producing a composite fibre material in the form of a fibre band (2) impregnated with a polymer comprising the following steps:
- providing a raw fibre band (4) and conveying the raw fibre band (4) along a processing path (5),
- preheating the raw fibre band (4) to a processing temperature which is higher than a melting point of the polymer,
- applying the melted polymer to the whole width of the raw fibre band (4) on a surface of the raw fibre band (4),
- applying pressure to the raw fibre band (4) perpendicular to the plane of the band after applying the polymer, wherein the pressure is applied by at least one pressure stamp (20) with the simultaneous application of shearing vibration of the pressure stamp (20) by a vibration movement component (y) in the band plane and transversely to a band running direction,
- keeping the raw fibre band (4) within a processing temperature range above the polymer melting point at least until the completion of the pressure-shearing vibration.

2. Method according to claim 1, **characterised in that** the provided raw fibre band (4) is made from a plurality of rovings (7) brought together, wherein the raw fibre band (4) treated with a sizing preparation is firstly charged for specifically separating individual filaments within the individual rovings (7) with a shearing force with force component perpendicular to the band plane.

3. Method according to claim 1 or 2, **characterised by** the following steps for providing the raw fibre band (4),
- providing a plurality of rovings (7) on a plurality of roving bobbins,
- removing the rovings (7) from the roving bobbins and bringing the rovings (7) together to form a raw fibre band (4).

4. Method according to one of claims 1 to 3, **characterised in that** the polymer is applied onto the raw fibre band (4) whilst the raw fibre band (4) is conveyed under normal environmental pressure.

5. Method according to one of claims 1 to 4, **characterised in that** the application of pressure shearing vibration on a section of the raw fibre band (4) is performed after the application of the polymer multiple times in succession along the processing path (5).

6. Method according to one of claims 1 to 5, **characterised in that** the application of pressure shearing vibration on a section of the raw fibre band (4) is performed after the application of the polymer from both sides of the band plane.

7. Device (1) for producing a composite fibre material in the form of a fibre band (2) impregnated with a polymer comprising:
- a transport device (3) for supplying a raw fibre band (4) and for transporting the fibre band (2, 4) along a processing path (5),
- a preheating device (9) for preheating the raw fibre band (4) to a processing temperature which is higher than a melting point of the polymer,
- an application device (12) for applying the melted polymer onto the whole width of the raw fibre strip (4) on a surface of the raw fibre band (4),
- at least one pressure shearing vibration application device (18, 19; 39) which comprises at least one pressure stamp (20; 40, 41) for the application of pressure onto the raw fibre band (4) perpendicular to the band plane after the application of the polymer by the pressure stamp (20; 40, 41) with the simultaneous application of the shearing vibration of the pressure stamp (20; 40, 41) with a vibration movement component (y) in the band plane and perpendicular to a band running direction, wherein the raw fibre band (4) is guided between the pressure stamp (20; 40, 41) and a counter pressure body (21; 43, 42),
- at least one tempering device (22, 34; 45) for keeping the raw fibre band (4) within a processing temperature range above the polymer melting point until the completion of the pressure shearing vibration.

8. Device according to claim 7, **characterised by** a shearing force application device (8) arranged in the processing path ahead of the application device (12) which is configured such that the raw fibre band (4) treated with a sizing preparation is firstly charged for the specific separation of individual filaments within individual rovings (7) with a shearing force (S) with force component perpendicular to a band plane (xy), in particular before the rovings (7) forming the raw fibre band (4) are brought together to form the raw fibre band (4).

9. Device according to claim 7 or 8, **characterised in that** the application device (12) has a wide slot nozzle (14).

10. Device according to one of claims 7 to 9, **characterised in that** the pressure shearing vibration stamp (20; 40, 41) has a stamp head (23; 42, 43) with a run-in section (24), a pressure shearing vibration application section (25; 38) and a run-out section (26).

11. Device according to one of claims 7 to 10, **characterised by** a plurality of pressure shearing vibration stamps (20) arranged behind one another along the processing path (5).

12. Device according to one of claims 7 to 11, **characterised by** opposite pressure shearing vibration stamps (40, 41), wherein the application of pressure shearing vibration on a section of the raw fibre band (4) is performed after the application of the polymer from both sides by the two opposite pressure shearing vibration stamps (40, 41).

13. Device according to one of claims 7 to 12, **characterised in that** the counter pressure body (21; 43, 42) is coupled to a tempering device (22).

## Revendications

1. Procédé de fabrication d'un matériau composite fibreux sous la forme d'une bande de fibres imprégnée d'un polymère (2) comprenant les étapes suivantes :
- préparation d'une bande de fibres brute (4) et transport de la bande de fibres brutes (4) le long d'un trajet de traitement (5),
- chauffage préalable de la bande de fibres brute (4) à une température de traitement qui est supérieure au point de fusion du polymère,
- étalement du polymère fondu sur une épaisseur totale de la bande de fibres brute (4) sur une surface de la bande de fibres brute (4),
- application d'une pression sur la bande de fibres brute (4) s'effectuant perpendiculairement par rapport au plan de la bande après l'étalement du polymère, l'application de la pression étant effectuée avec au moins un pilon de pression (20) avec une sollicitation simultanée par une vibration de cisaillement du pilon de pression (20) comprenant une composante de mouvement de vibration (y) dans le plan de la bande et s'effectuant perpendiculairement par rapport à une direction de défilement,
- maintien de la bande de fibres brute (4) dans un domaine de température de traitement supérieur au point de fusion du polymère au moins jusqu'à l'arrêt de la sollicitation par des vibrations de compression-cisaillement.

2. Procédé selon la revendication 1 **caractérisé en ce que** la bande de fibres brute (4) préparée est fabriquée à partir d'une multitude de rovings (7) rassemblés, la bande de fibres brute (4), traitée avec une substance de revêtement, est transformée par, en premier lieu, un démêlage des filaments individuels dans un roving (7) individuel ciblé avec une force de cisaillement comprenant des composantes perpendiculaires au plan de la bande.

3. Procédé selon les revendications 1 ou 2 **caractérisé par** les étapes suivantes pour la préparation de la bande de fibres brute (4) :
- préparation d'une multitude de rovings (7) sur plusieurs bobines de roving,
- détachement des rovings (7) des bobines de rovings et rassemblement des rovings (7) en une bande de fibres brute (4).

4. Procédé selon l'une des revendications de 1 à 3 **caractérisé en ce que** l'étalement du polymère sur la bande de fibres brute (4) a lieu pendant que la bande de fibres brute (4) est transportée à une pression environnementale normale.

5. Procédé selon l'une des revendications de 1 à 4 **caractérisé en ce que** la sollicitation par vibration en traction-cisaillement d'une section de la bande de fibres brute (4) est effectuée à plusieurs reprises successives après le revêtement par le polymère le long du trajet de traitement (5).

6. Procédé selon l'une des revendications de 1 à 5 **caractérisé en ce que** la sollicitation par vibration en traction-cisaillement d'une section de la bande de fibres brute (4) est effectuée après le revêtement par le polymère des deux faces du plan de la bande.

7. Dispositif (1) de fabrication d'un matériau composite fibreux sous la forme d'une bande de fibres (2) imprégnée avec un polymère
- comprenant une installation de transport (3) pour la conduite d'une bande de fibres brute (4) et pour le transport de la bande de fibres (2, 4) le long d'un trajet de traitement (5),
- comprenant une installation de préchauffage (9) pour le préchauffage de la bande de fibres brute (4) à une température de traitement qui est supérieure au point de fusion du polymère ;
- comprenant une installation de revêtement (12) pour l'étalement d'un polymère fondu sur la largeur totale de la bande de fibres brute (4) sur la surface de la bande de fibres brute (4),
- comprenant au moins une installation de sollicitation par vibration en traction-cisaillement (18, 19 ; 39) qui présente au moins un pilon de pression (20 ; 40, 41) pour l'apport d'une pression, sur la bande de fibres brute (4), perpendiculaire par rapport au plan de la bande après le revêtement par le polymère avec le pilon de pression (20 ; 40, 41) avec une sollicitation par vibration en cisaillement simultanée du pilon de pression (20 ; 40, 41) comprenant une composante de mouvement de vibration (y) dans le plan de la bande et perpendiculaire à une direction de déplacement de la bande, la bande de fibres brute (4) étant menée entre le pilon de pression (20 ; 40, 41) et un corps complémentaire de pression (21 ; 43, 42),
- comprenant au moins une installation de thermorégulation (22 ; 34 ; 45) pour conserver la bande de fibres brute (4) dans un domaine de température de traitement au dessus du point de fusion du polymère jusqu'à la fin de la sollicitation par vibration en traction-cisaillement.

8. Dispositif selon la revendication 7 **caractérisé par** une installation de sollicitation par une force de cisaillement, disposée devant l'installation de revêtement (12) sur le trajet de traitement, qui est conçue de telle manière que la bande de fibres brute (4) traitée avec un produit de revêtement est d'abord alimentée avec une force de cisaillement (S) ciblée comprenant des composantes de force perpendiculaires à un plan de bande (xy) pour le démêlage des filaments individuels à l'intérieur des rovings (7) individuels, en particulier avant que les rovings (7), formant la bande de fibres brute (4), ne soient rassemblés pour former la bande de fibres brute (4).

9. Dispositif selon les revendications 7 ou 8 **caractérisé en ce que** l'installation de revêtement (12) présente une buse à fente large (14).

10. Dispositif selon l'une des revendications de 7 à 9 **caractérisé en ce que** le pilon de vibration en traction-cisaillement (20 ; 40, 41) présente une tête de pilon (23 ; 42, 43) comportant une section de démarrage (24), une section de sollicitation par vibration en traction-cisaillement (25 ; 38) et une section de décélération (26).

11. Dispositif selon l'une des revendications de 7 à 10 **caractérisé par** plusieurs pilons de vibration en traction-cisaillement (20) disposés les uns derrière les autres le long du trajet de traitement (5).

12. Dispositif selon l'une des revendications de 7 à 11 **caractérisé par** des pilons de vibration en traction-cisaillement (40, 41) situés les uns en face des autres, la sollicitation par vibration en traction-cisaillement d'une section de la bande de fibres brute (4) s'effectuant après le revêtement par le polymère à partir des deux côtés par les deux pilons de vibration en traction-cisaillement (40, 41) se faisant face.

13. Dispositif selon l'une des revendications de 7 à 12 **caractérisé en ce que** le corps complémentaire de pression (21 ; 43, 42) est couplé avec une installation de thermorégulation (22).
